# EUROPEAN PATENT APPLICATION

(11) **EP 4 681 978 A1**
(43) Date of publication of application: **21.01.2026**
(21) Application number: 25178988.9
(22) Date of filing: 27.05.2025
(51) Int. Cl.: B60L 53/16, B60L 53/35, B25J 11/00

(54) **AUTOMATIC CHARGING ROBOT**

(30) Priority: 17.07.2024 JP 2024114297
(71) Applicant: TOYOTA JIDOSHA KABUSHIKI KAISHA, Toyota-shi, Aichi-ken 471-8571 (JP)
(72) Inventor: TSUZUKI, Motohiro, Aichi-ken, 471-8571 (JP)
(74) Representative: D Young & Co LLP

(57) **Abstract**

An automatic charging robot 1 that performs charging by inserting a charging connector 5 into a charging port of a vehicle, the automatic charging robot 1 includes a robot hand 2 that holds the charging connector 5 when the charging connector 5 is automatically inserted into and removed from the charging port. The robot hand 2 includes a holding device 21 that holds a holding member 7 attached to the charging connector 5, and a plunger 22 that presses, by the holding device 21 being at a position at which the holding member 7 is holdable, a release button 13 provided on the charging connector 5 as an operation unit to release a locked state in which the charging connector 5 inserted into the charging port is locked.

## Description

### BACKGROUND OF THE INVENTION

### 1. Field of the Invention

The present invention relates to an automatic charging robot.

### 2. Description of the Related Art

Japanese Laid-open Patent Publication 2020-072625 discloses a charging system for charging a large number of vehicles in a parking lot with a smaller number of chargers than the number of parking spaces in the parking lot and a smaller number of automatic charging robots than the chargers.

### PRIOR ART DOCUMENT

### PATENT DOCUMENT

Patent Document 1: Japanese Laid-open Patent Publication 2020-072625

### SUMMARY OF THE INVENTION

### PROBLEM TO BE SOLVED BY THE INVENTION

In a charging method for connecting a charging connector to a charging port of a vehicle, a locking mechanism for locking the charging connector so as not to be detached during charging and a releasing mechanism for releasing a locked state of the charging connector are required. When an automatic charging robot is applied to this charging method, it is conceivable that the automatic charging robot operates the releasing mechanism, but a specific configuration is not considered in Japanese Laid-open Patent Publication 2020-072625 A**,** and there is room for consideration.

The present invention has been made in view of the above circumstance, and an object thereof is to provide an automatic charging robot capable of automatically releasing a locked state of a charging connector with a simple structure.

According to the present invention, an automatic charging robot to perform charging by inserting a charging connector into a charging port of a vehicle, includes: a robot hand to hold the charging connector when the charging connector is automatically inserted into and removed from the charging port. Further, the robot hand includes: a holding device to hold a holding member attached to the charging connector; and a pressing portion to press, by the holding device being at a position at which the holding member is holdable, a release button provided on the charging connector as an operation unit to release a locked state in which the charging connector inserted into the charging port is locked.

According to this configuration, it is possible to remove the charging connector from the charging port while pressing the release button with a simple structure.

In the automatic charging robot, the holding device may include: a pair of claw portions formed so as to face each other and to hold the holding member so as to sandwich the charging connector from both sides in a width direction; and an actuator to operate the pair of claw portions so as to change a facing distance between the pair of claw portions. Further, the robot hand may be relatively movable with respect to the charging connector between a holding position, the holding position being a relative position when the pair of claw portions is at a position at which the holding member is holdable, and a releasing position, the releasing position being a relative position when the charging connector is not in a facing space of the pair of claw portions, and the pressing portion may start pressing the release button while the robot hand is moving from the releasing position toward the holding position.

According to this configuration, the positional relationship between the robot hand and the charging connector changes, whereby the robot hand presses the release button.

In the automatic charging robot, the pressing portion may be a fixing member fixed to the robot hand, and the robot hand may be brought to a pressing state in which the fixing member always presses the release button when the claw portions are at the position at which the holding member is holdable.

According to this configuration, it is possible for the fixing member to release the locked state of the charging connector.

In the automatic charging robot, the pressing portion may be constituted by a hinge mechanism to support a pressing piece so as to be swingable, and the hinge mechanism nae be switched between a pressable state, in which the release button is pressable by the pressing piece when the pressing piece is in a lowered state, and a non-pressable state, in which the release button is not pressable by the pressing piece when the pressing piece is in a raised state.

According to this configuration, it is possible that the pressing piece does not necessarily press the release button, even when the robot hand holds the charging connector.

In the automatic charging robot, while the hinge mechanism is in the pressable state, the robot hand may be brought to a pressing state, in which the pressing piece presses the release button when the claw portions are at the position at which the holding member is holdable, and while the hinge mechanism is in the non-pressable state, the robot hand may be brought to a non-pressing state, in which the pressing piece does not press the release button even when the claw portions are at the position at which the holding member is holdable.

According to this configuration, the charging connector is not removed from the charging port by the weight of the charging connector, even when the robot hand releases chucking.

In the automatic charging robot, the hinge mechanism may be switched between the pressable state and the non-pressable state by gravity acting on the pressing piece when the robot hand rotates around a predetermined rotation center axis.

According to this configuration, it is not necessary to provide a dedicated actuator for operating the pressing piece.

### EFFECT OF THE INVENTION

In the present disclosure, it is possible to automatically release a locked state of a charging connector with a simple structure.

### BRIEF DESCRIPTION OF THE DRAWINGS

FIG. 1 is a diagram illustrating an automatic charging robot according to a first embodiment;
FIG. 2 is a diagram illustrating a charging connector and a holding member;
FIG. 3 is a diagram illustrating a state in which a holding device does not hold the charging connector while a robot hand is at a holding position;
FIG. 4 is a diagram for explaining a claw portion and the holding member;
FIG. 5 is a diagram illustrating a state in which the holding device holds the charging connector;
FIG. 6 is a diagram for explaining a state in which a plunger presses a release button while the holding device holds the charging connector;
FIG. 7 is a diagram for explaining a case in which the charging connector inserted into a charging port of a vehicle is removed by the robot hand;
FIG. 8 is a diagram illustrating an automatic charging robot according to a second embodiment;
FIG. 9 is a diagram illustrating a state in which a pressing piece is raised;
FIG. 10 is a diagram for explaining that the pressing piece is switched from a lowered state to a raised state;
FIG. 11 is a diagram for explaining that a holding device holds a charging connector while the pressing piece is in the raised state; and
FIG. 12 is a diagram for explaining that the holding device holds the charging connector while the pressing piece is in the lowered state.

### DETAILED DESCRIPTION OF THE PREFERRED EMBODIMENT

Hereinafter, an automatic charging robot according to embodiments of the present invention is specifically described. Note that, the present invention is not limited to the embodiments described below.

### First Embodiment

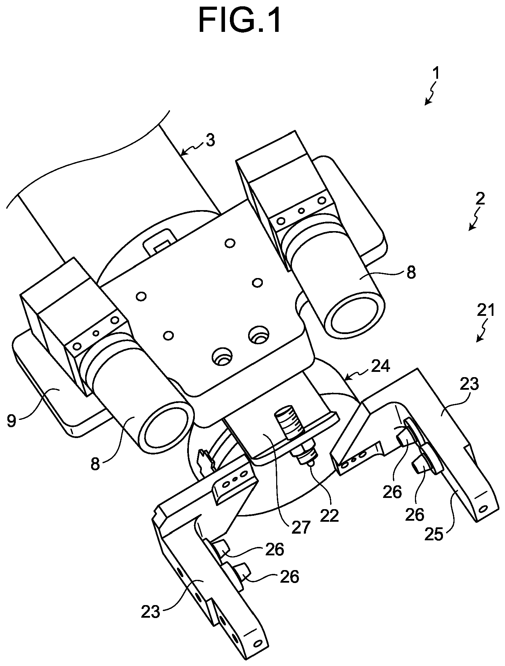

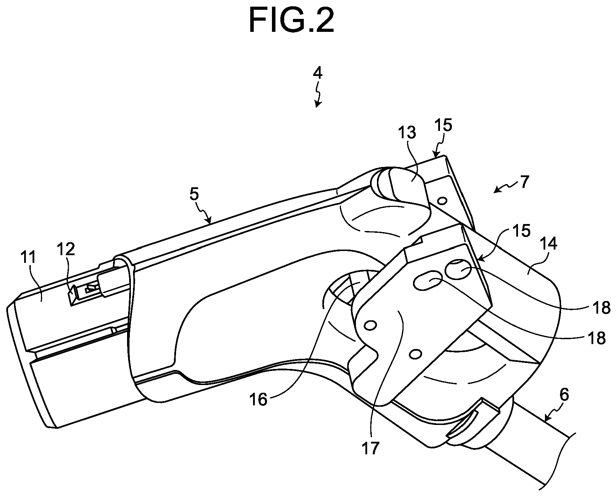

FIG. 1 is a diagram illustrating an automatic charging robot according to a first embodiment. An automatic charging robot 1 includes a robot hand 2 and a robot arm 3. The automatic charging robot 1 is a vertically articulated robot with the robot hand 2 at a tip of the robot arm 3. For example, the automatic charging robot 1 is a six-axis mechanism robot. The robot arm 3 is operated, whereby the automatic charging robot 1 can displace the position of the robot hand 2 to a desired position and also change the posture of the robot hand 2 to a desired posture. The automatic charging robot 1 is a robot installed in a parking lot or the like. The automatic charging robot 1 is installed near a charger 4. As illustrated in FIG. 2, the charger 4 includes a charging connector 5 and a charging cable 6. The charger 4 is a charger (charging stand) to be used to charge a vehicle. The charger 4 is a charging stand installed in a parking lot or the like. The charging connector 5 is electrically connected to an external power supply via the charging cable 6. The automatic charging robot 1 charges a vehicle by inserting the charging connector 5 into a charging port of the vehicle. The automatic charging robot 1 automatically inserts and removes the charging connector 5 into and from the charging port of the vehicle while the robot hand 2 holds the charging connector 5.

As illustrated in FIG. 2, the charging connector 5 includes an insertion portion 11, a locking mechanism 12, a release button 13, and a gripping portion 14.

The insertion portion 11 is a columnar portion to be inserted into the charging port of the vehicle. The insertion portion 11 is provided with a terminal at a tip thereof. The locking mechanism 12 is a mechanism that locks the charging connector 5 to the charging port so that the charging connector 5 does not fall off from the charging port when the insertion portion 11 is inserted into the charging port. The locking mechanism 12 includes a locking claw provided on the insertion portion 11. The locking claw is a movable member whose tip side swings. The locking claw is operable between a state of protruding from the insertion portion 11 and a state of being accommodated in the insertion portion 11. The locking mechanism 12 is switched between a locked state, in which the locking claw protrudes from the insertion portion 11, and an unlocked state, in which the locking claw is accommodated in the insertion portion 11. In the state, in which the locking claw protrudes from the insertion portion 11, the locking claw includes a locking surface extending in a direction orthogonal to a direction in which the charging connector 5 is removed from the charging port, and a receiving surface extending in a direction inclined with respect to a direction in which the charging connector 5 is inserted into the charging port. The locking surface is a flat surface facing a direction in which the charging connector 5 is removed in the state in which the locking claw protrudes from the insertion portion 11. The locking claw protrudes from the insertion portion 11 while the insertion portion 11 is inserted into the charging port, whereby the locking surface of the locking claw is locked with the locking portion of the charging port, which restricts the movement of the charging connector 5 in the removal direction. The receiving surface is a surface that is pressed by the charging port while the insertion portion 11 is being inserted into the charging port to receive a load for accommodating the locking claw in the insertion portion 11. Since the locking claw is accommodated in the insertion portion 11 due to the load received by the receiving surface from the charging port while the charging connector 5 is being inserted into the charging port, the locking mechanism 12 is brought to the unlocked state without operating the release button 13.

The release button 13 is an operation unit that releases the locked state of the charging connector 5 by the locking mechanism 12. The release button 13 is provided as an operation unit that releases the state, in which the charging connector 5 inserted into the charging port of the vehicle is locked. The release button 13 is a button that can be pressed by a user. The release button 13 is not pressed when the insertion portion 11 is not inserted into the charging port, whereby the locking claw protrudes from the insertion portion 11. The release button 13 is pressed when the insertion portion 11 is inserted into the charging port and the charging connector 5 is in the locked state, whereby the locking mechanism 12 performs a releasing operation to accommodate the locking claw in the insertion portion 11. When the release button 13 is pressed, the charging connector 5 can be removed from the charging port. The gripping portion 14 is a portion to be held by the user. The release button 13 is provided at a position at which the user can press the gripping portion 14 with the thumb of one hand while holding the gripping portion 14 with the hand. To the charging connector 5, a holding member 7 to be held by the robot hand 2 is attached. The holding member 7 is fixed near the release button 13. The holding member 7 is fixed to the charging connector 5 and integrated with the charging connector 5.

The holding member 7 includes a holding portion 15 and a connecting portion 16. The holding portion 15 is a portion to be held by the robot hand 2. The holding portion 15 is formed in a plate shape having a predetermined thickness in the width direction of the charging connector 5. The holding portion 15 is a pair of portions disposed on both sides of the charging connector 5 in the width direction of the charging connector 5. The pair of holding portions 15 is disposed outside the gripping portion 14 in the width direction so as to sandwich the gripping portion 14. The connecting portion 16 is formed in a rod shape and connects the pair of holding portions 15. The connecting portion 16 extends between the pair of holding portions 15 in the width direction of the charging connector 5. One holding portion 15 is joined to one end of the connecting portion 16, and the other holding portion 15 is joined to the other end of the connecting portion 16. The pair of holding portions 15 is integrated via the connecting portion 16.

The holding portion 15 includes a flat surface 17 and a fitting hole 18. The flat surface 17 is a surface facing outward in the width direction of the charging connector 5. The pair of holding portions 15 each includes the flat surface 17 as a side surface, whereby the holding member 7 has a shape similar to a quadrangular workpiece. The fitting hole 18 is a hole that opens in the flat surface 17. Two fitting holes 18 are formed side by side in the flat surface 17. One holding portion 15 is provided with two fitting holes 18. Four fitting holes 18 are provided in the entire holding member 7. The fitting holes 18 are portions to be chucked by the robot hand 2. The holding member 7 is a fixing member to be chucked by the robot hand 2. The holding portions 15 of the holding member 7 are held by the robot hand 2, whereby the charging connector 5 is held by the robot hand 2. Since the flat surface 17 forms a side surface similar to a quadrangular workpiece, the robot hand 2 chucks the fitting holes 18, whereby the charging connector 5 can be prevented from rolling with respect to the robot hand 2 about an axis in the extending direction of the insertion portion 11. Since the two fitting holes 18 are disposed, the robot hand 2 chucks the two fitting holes 18, whereby the tip side of the insertion portion 11 of the charging connector 5 can be prevented from pitching with respect to the robot hand 2. Note that, in this description, when the holding member 7 is referred to, the holding member 7 has the same meaning as the holding portions 15.

As illustrated in FIG. 1, the robot hand 2 includes a holding device 21 and a plunger 22.

The holding device 21 is a griper that holds the holding member 7. The holding device 21 includes two claw portions 23 and an actuator 24. The two claw portions 23 are a pair of members disposed at positions facing each other. The actuator 24 operates the claw portions 23 in such a manner that the facing distance between the pair of claw portions 23 changes. The actuator 24 is constituted by a drive system, such as air pressure, electric power, or hydraulic pressure. The holding device 21 is a parallel open/close type in which the pair of claw portions 23 slides in parallel for opening/closing operation.

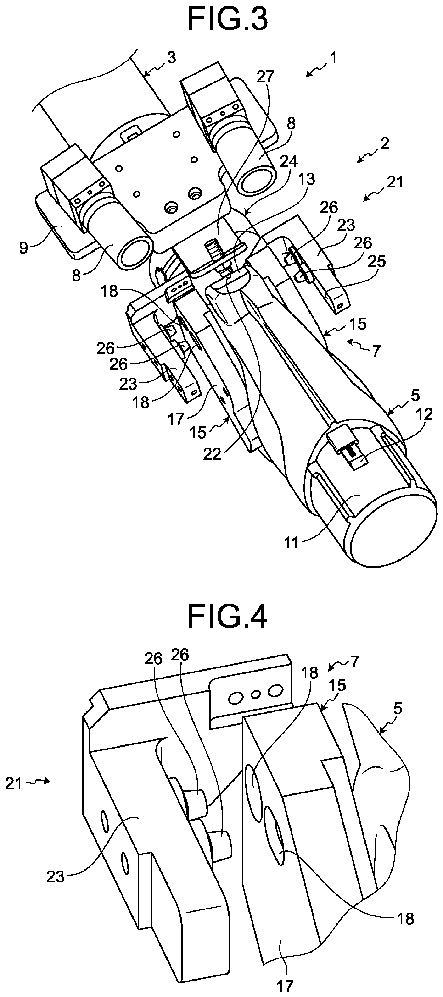

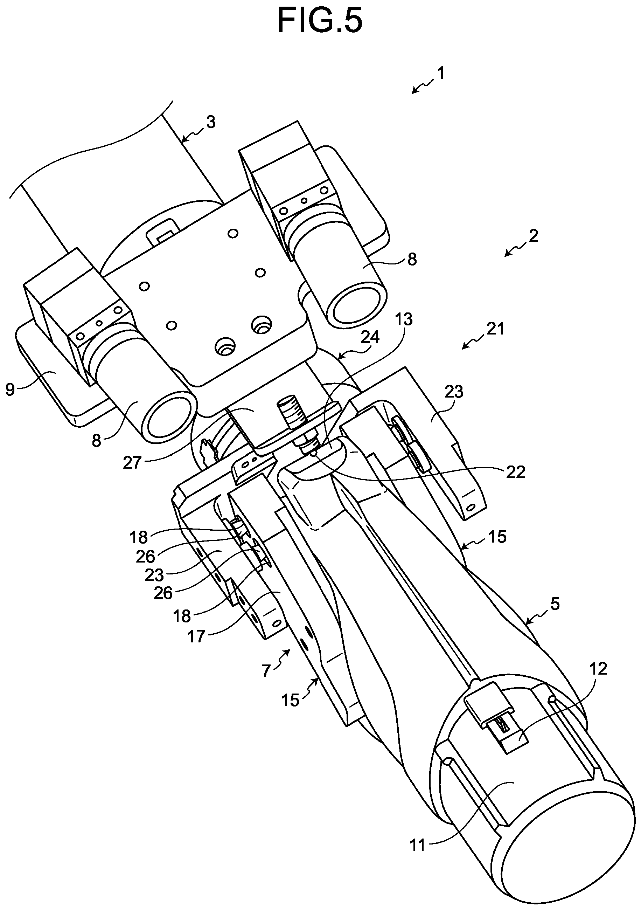

As illustrated in FIGS. 3 to 5, the pair of claw portions 23 sandwiches the charging connector 5 from both sides in the width direction to hold the holding member 7. FIG. 3 illustrates that the holding device 21 is in an open state when the holding device 21 is at a position at which the holding member 7 is holdable. FIG. 5 illustrates that the holding device 21 is in a closed state when the holding device 21 is at a position at which the holding member 7 is holdable. As illustrated in FIG. 3, the claw portions 23 each include a facing surface 25 and a pin 26.

The facing surface 25 is a flat surface facing the facing space of the claw portions 23. When the charging connector 5 is not in the facing space of the pair of claw portions 23, the facing surface 25 faces the facing surface 25 of the other claw portion 23. When the holding device 21 is at a position at which the holding member 7 is holdable, the facing surface 25 faces the flat surface 17 of the holding member 7 as illustrated in FIG. 3.

The pin 26 is a portion to be fitted into the fitting hole 18. The pin 26 is a cylindrical protrusion protruding from the facing surface 25, and is provided at a position corresponding to the fitting hole 18. One claw portion 23 is provided with two pins 26. Four pins 26 are provided in the entire holding device 21.

As illustrated in FIG. 4, when the holding device 21 is at a position at which the holding member 7 is holdable, the pins 26 and the fitting holes 18 face each other. When the holding device 21 is closed from this state and the pair of claw portions 23 slides in parallel so as to narrow the facing distance between the claw portions 23, the pins 26 are fitted into the fitting holes 18. As illustrated in FIG. 5, the state in which the pins 26 are fitted into the fitting holes 18 is a state in which the holding device 21 holds the holding member 7 and a state in which the robot hand 2 chucks the holding member 7. Since the holding member 7 is integrated with the charging connector 5, the state in which the holding device 21 holds the holding member 7 is a state in which the robot hand 2 holds the charging connector 5.

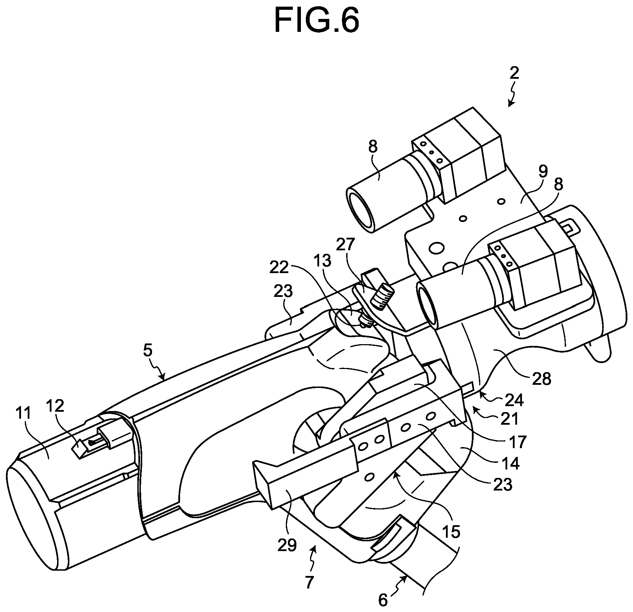

The plunger 22 is a portion to be brought into contact with the release button 13, and is a pressing portion that presses the release button 13. The plunger 22 is a fixing member that is disposed in a direction in which the release button 13 can be pressed, and is fixed to the robot hand 2. The plunger 22 is fixed at a position corresponding to the release button 13. The plunger 22 is fixed to a casing 28 via a support member 27. The support member 27 is a member that supports the plunger 22. The support member 27 and the plunger 22 have rigidity capable of pressing the release button 13. The casing 28 is a casing of the actuator 24. The support member 27 is fixed to an upper portion of the casing 28 and extends so as to protrude toward the front of the casing 28. As illustrated in FIGS. 5 and 6, the holding device 21 holds the holding member 7, whereby the plunger 22 presses the release button 13.

The automatic charging robot 1 includes a camera 8 attached to the robot hand 2. The camera 8 captures an image of the front side of the robot hand 2. The camera 8 is fixed to the casing 28 via a base 9. The base 9 is disposed behind the support member 27 and is fixed to an upper portion of the casing 28. Two cameras 8 are provided so as to capture images of the claw portions 23 on the front side from the outside in the width direction of the plunger 22 and the support member 27. The two cameras 8 capture images in an imaging range including the tip side of the claw portions 23. The automatic charging robot 1 controls the position of the robot hand 2 based on the images captured by the cameras 8. Note that tip claw portions 29 may be attached to the tips of the claw portions 23. In FIGS. 1, 3, and 5, illustration of the tip claw portions 29 are omitted.

The robot hand 2 is relatively movable with respect to the charging connector 5 between a holding position and a releasing position. The holding position is a relative position when the claw portions 23 are at a position at which the holding member 7 is holdable. The releasing position is a relative position when the charging connector 5 is not in the facing space of the pair of claw portions 23. When the relative positional relationship between the charging connector 5 and the robot hand 2 is the holding position, the plunger 22 presses the release button 13. When the claw portions 23 are at a position at which the holding portion 15 is holdable, the robot hand 2 is in a pressing state in which the plunger 22 always presses the release button 13. As illustrated in FIGS. 5 and 6, when the holding device 21 chucks the holding member 7, the plunger 22 always presses the release button 13. That is, in the automatic charging robot 1, the operation for pressing the release button 13 from the state in which the robot hand 2 is at the holding position does not occur. In the automatic charging robot 1, the robot hand 2 moves from the releasing position to the holding position, whereby the pressing of the release button 13 by the plunger 22 is completed.

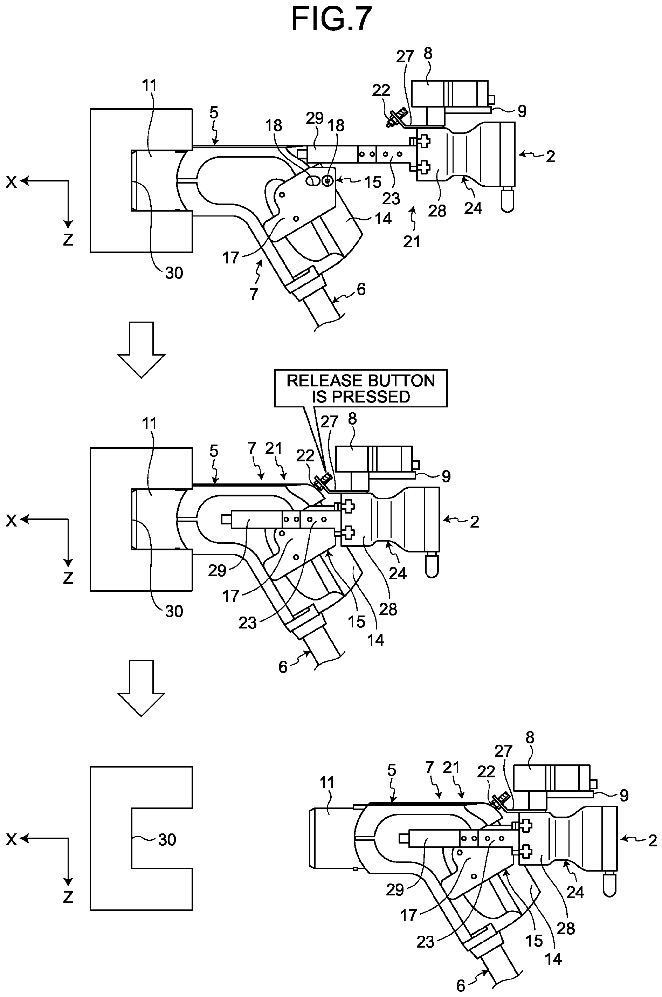

FIG. 7 is a diagram for explaining a case in which the charging connector inserted into a charging port is removed. As illustrated in FIG. 7, the charging connector 5 inserted into a charging port 30 of a vehicle can be removed by the robot hand 2.

First, the robot hand 2 moves from the releasing position toward the holding position with respect to the charging connector 5 locked to the charging port 30. At this time, the robot hand 2 has a positional relationship in which the plunger 22 and the release button 13 face each other, and approaches the charging connector 5 toward the holding position in a direction in which the release button 13 is pressed. The robot hand 2 is positioned at the holding position, whereby the plunger 22 presses the release button 13 regardless of chucking by the holding device 21. While the robot hand 2 is moving from the releasing position toward the holding position, the plunger 22 starts pressing the release button 13. At the holding position, the claw portions 23 are closed while the plunger 22 presses the release button 13, and the holding device 21 chucks the holding member 7. In a case in which the robot hand 2 removes the charging connector 5 from the charging port 30, the pressing of the release button 13 by the plunger 22 is performed first, and the chucking of the holding member 7 by the holding device 21 is performed second. Since the state in which the holding device 21 chucks the holding member 7 is the state in which the plunger 22 presses the release button 13, when the robot hand 2 moves in the direction in which the charging connector 5 is removed from the charging port 30 in this state, the charging connector 5 can be removed from the charging port 30.

In a case in which the robot hand 2 inserts the charging connector 5 into the charging port 30, the order is the opposite to that described with reference to FIG. 7. First, the robot hand 2 holds the charging connector 5 held by a connector holding portion of the charger 4. In this holding state, the plunger 22 presses the release button 13. Then, the robot hand 2 inserts the insertion portion 11 into the charging port 30 while holding the charging connector 5. When the insertion of the insertion portion 11 into the charging port 30 is completed, the robot hand 2 remains still at the holding position and opens the claw portions 23 to release the chucking of the holding member 7 by the holding device 21. Even when the chucking of the holding member 7 is released at the holding position, the pressing of the release button 13 by the plunger 22 continues. The robot hand 2 moves from the holding position toward the releasing position after the chucking is released, whereby the plunger 22 is separated from the release button 13 and does not press the release button 13. In the operation after the insertion of the charging connector 5 into the charging port 30 is completed, the chucking of the holding member 7 by the holding device 21 is released first, and the pressing release in which the plunger 22 is separated from the release button 13 is performed second.

As described above, according to the first embodiment, it is possible to press the release button 13 by the plunger 22 provided in the robot hand 2 without providing an actuator for operating the release button 13 in the charging connector 5. As a result, it is possible to automatically release the locked state of the charging connector 5 with a simple structure.

Note that the type of the plunger 22 is not particularly limited. The plunger 22 is constituted by a ball plunger, a pin plunger, or the like.

In addition, the pressing portion that presses the release button 13 is only required to be a fixing member fixed to the robot hand 2, and is not limited to the plunger 22.

In addition, the robot hand 2 is not particularly limited to including or not including the tip claw portions 29. The tip claw portions 29 are claw portions to be brought into contact with a lid of the charging port 30, and are used to open and close the lid.

### Second Embodiment

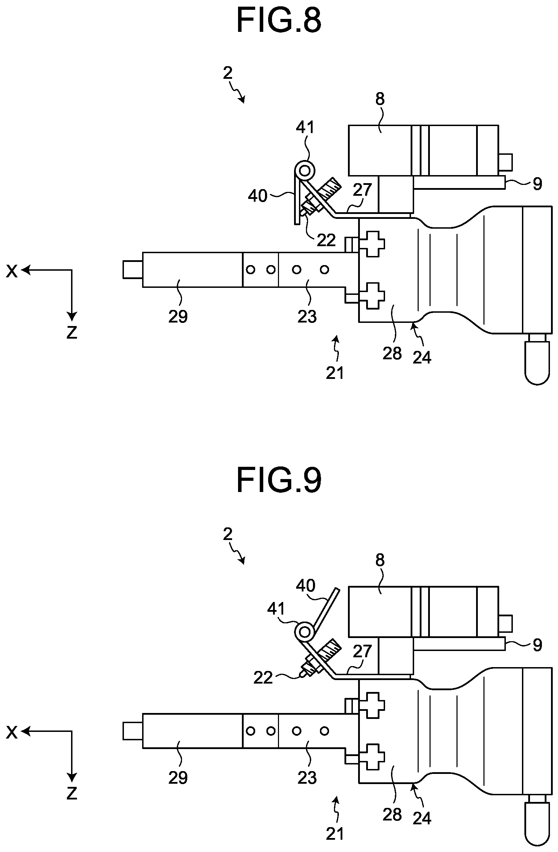

FIG. 8 is a diagram illustrating an automatic charging robot according to a second embodiment. Unlike the first embodiment, an automatic charging robot 1 according to the second embodiment is configured in such a manner that a robot hand 2 does not necessarily press a release button 13 even when the robot hand 2 holds a charging connector 5. In the second embodiment, the description of the configurations similar to those in the above first embodiment is omitted, and the reference signs thereof are referred to.

As illustrated in FIG. 8, the robot hand 2 according to the second embodiment includes a hinge mechanism 41 including a pressing piece 40. A pressing portion according to the second embodiment is configured by including the hinge mechanism 41 that supports the pressing piece 40 so as to be swingable.

The pressing piece 40 is a portion to be brought into contact with the release button 13, and is a pressing portion that presses the release button 13. The pressing piece 40 is supported by the hinge mechanism 41 so as to be swingable. The pressing piece 40 can swing within a predetermined angle range with the hinge mechanism 41 as a fulcrum.

The hinge mechanism 41 is provided at a tip portion of a support member 27. The pressing piece 40 and the hinge mechanism 41 function as a switching mechanism. As illustrated in FIGS. 8 and 9, when the robot hand 2 is in a holding posture, the hinge mechanism 41 can be in a state in which the pressing piece 40 is lowered and a state in which the pressing piece 40 is raised. The holding posture is a horizontal posture in which claw portions 23 are parallel to a horizontal direction X, and is a posture in which the support member 27 is positioned above the claw portions 23. The hinge mechanism 41 is switched between a state in which the release button 13 is pressable by the pressing piece 40 (pressable state) and a state in which the release button 13 is not pressable by the pressing piece 40 (non-pressable state). When the hinge mechanism 41 is in the pressable state, the robot hand 2 is in the pressable state. When the hinge mechanism 41 is in the non-pressable state, the robot hand 2 is in the non-pressable state.

As illustrated in FIG. 8, the pressing piece 40 is lowered when the robot hand 2 is in the holding posture, whereby the hinge mechanism 41 can press the release button 13 by the pressing piece 40. In this state, the robot hand 2 is positioned at the holding position, whereby the pressing piece 40 is brought into contact with the release button 13.

As illustrated in FIG. 9, the pressing piece 40 is raised when the robot hand 2 is in the holding posture, whereby the release button 13 cannot be pressed by the pressing piece 40. In this state, when the robot hand 2 is positioned at the holding position, the pressing piece 40 is not brought into contact with the release button 13.

Based on the positional relationship between the pressing piece 40 and the hinge mechanism 41 in a gravity direction Z, these can be expressed as a lowered state of the pressing piece 40 and a raised state of the pressing piece 40. A state in which the pressing piece 40 is lowered below the hinge mechanism 41 is referred to as the lowered state of the pressing piece 40. A state in which the pressing piece 40 is raised above the hinge mechanism 41 is referred to as the raised state of the pressing piece 40.

As illustrated in FIG. 8, when the robot hand 2 is in the holding posture and the pressing piece 40 is in the lowered state, the pressing piece 40 is brought into contact with a plunger 22. The function of the plunger 22 is different between the first embodiment and the second embodiment. The plunger 22 according to the second embodiment restricts swinging of the pressing piece 40. In the second embodiment, when the robot hand 2 is at the holding position, the plunger 22 is not brought into contact with the release button 13 regardless of whether the robot hand 2 is in the pressable state or the non-pressable state.

Based on the positional relationship between the pressing piece 40 and the plunger 22, these can be expressed as a closed state of the pressing piece 40 and an open state of the pressing piece 40. A state in which the pressing piece 40 is in contact with the plunger 22 is referred to as the closed state of the pressing piece 40. A state in which the pressing piece 40 is not in contact with the plunger 22 is referred to as the open state of the pressing piece 40. As illustrated in FIG. 8, when the robot hand 2 is in the holding posture and the pressing piece 40 is in the lowered state, the pressing piece 40 is in contact with the plunger 22, and thus this state can be expressed as the closed state of the pressing piece 40. As illustrated in FIG. 9, when the robot hand 2 is in the holding posture and the pressing piece 40 is in the raised state, the pressing piece 40 is not in contact with the plunger 22, and this state can be expressed as the open state of the pressing piece 40. When the pressing piece 40 is in the open state, the plunger 22 can face the release button 13, but the plunger 22 is not in contact with the release button 13 even in this state.

The automatic charging robot 1 can switch between the lowered state of the pressing piece 40 and the raised state of the pressing piece 40 by using an actuator that rotates the robot hand 2 and an actuator that operates a robot arm 3. In short, the automatic charging robot 1 can switch the state of the robot hand 2 between the pressable state and the non-pressable state using an actuator provided as standard in the automatic charging robot 1, without providing a dedicated actuator for operating the pressing piece 40.

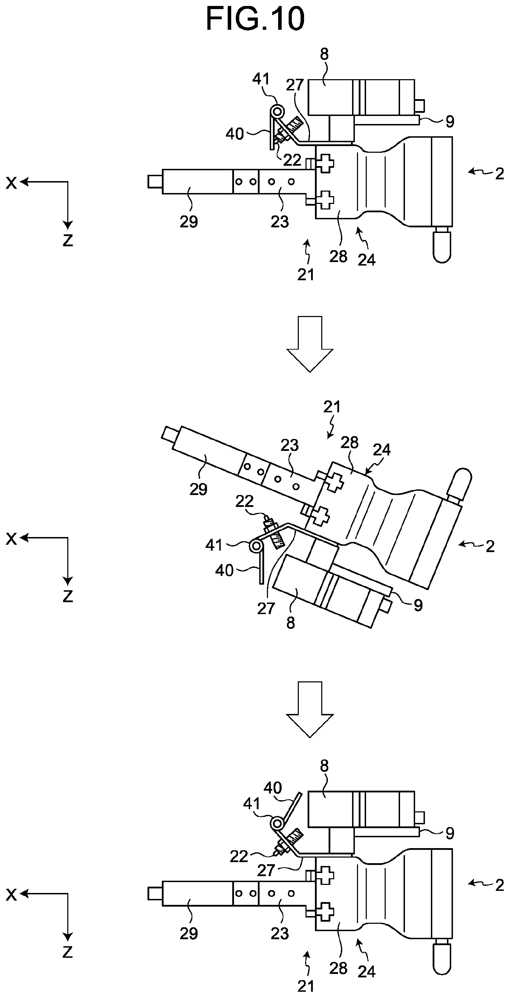

FIG. 10 is a diagram for explaining that the pressing piece is switched from the lowered state to the raised state. The robot hand 2 rotates on the rotation center axis inclined with respect to the horizontal direction X, whereby the pressing piece 40 is opened and closed by gravity acting on the pressing piece 40 to change the posture of the robot hand 2 so as to switch between the pressable state and the non-pressable state. The horizontal direction X is a direction orthogonal to the gravity direction Z.

As illustrated in FIG. 10, when the pressing piece 40 is switched from the lowered state to the raised state, first, the robot hand 2 is brought from a horizontal posture in which the claw portions 23 are parallel to the horizontal direction X to an inclined posture in which the tip side of the claw portions 23 is inclined upward with respect to the horizontal direction X. The robot hand 2 rotates by 180 degrees in this inclined posture, whereby the pressing piece 40 is brought to the open state by the action of gravity. The robot hand 2 rotates again by 180 degrees in the inclined posture and the pressing piece 40 is in the opened state, whereby the pressing piece 40 can be brought to the raised state. Then, the robot hand 2 is in the horizontal posture, whereby the switching mechanism is brought to a state in which the pressing piece 40 is raised above the hinge mechanism 41, and the robot hand 2 is brought to the non-pressable state. The robot hand 2 rotates on a predetermined rotation center axis at the releasing position to raise the pressing piece 40, and then moves to the holding position. At the holding position, a holding device 21 holds a holding member 7.

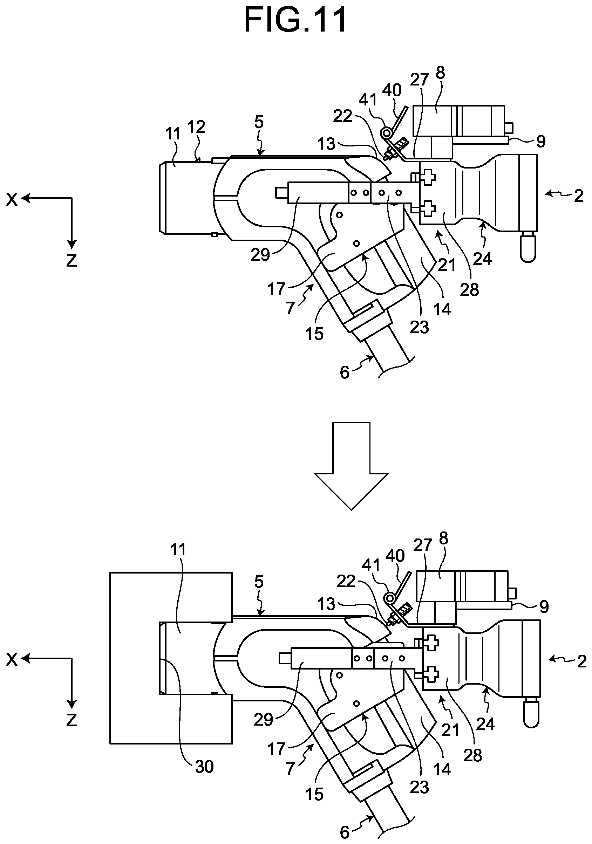

As illustrated in FIG. 11, in a case in which the automatic charging robot 1 inserts the charging connector 5 into a charging port 30, the robot hand 2 raises the pressing piece 40, and the holding device 21 chucks the holding member 7. In this chucking state, the robot hand 2 is in a non-pressing state in which the pressing piece 40 does not press the release button 13. In this chucking state, the robot hand 2 inserts an insertion portion 11 of the charging connector 5 into the charging port 30. When the insertion of the charging connector 5 into the charging port 30 is completed, the locking by the locking mechanism 12 is effective, and the robot hand 2 opens the holding device 21 to release the chucking of the holding member 7 while the charging connector 5 is locked. In the second embodiment, in a case in which the robot hand 2 inserts the charging connector 5 into the charging port 30, the locking of the charging connector 5 by the locking mechanism 12 is performed first, and the chucking of the holding member 7 by the holding device 21 is released second.

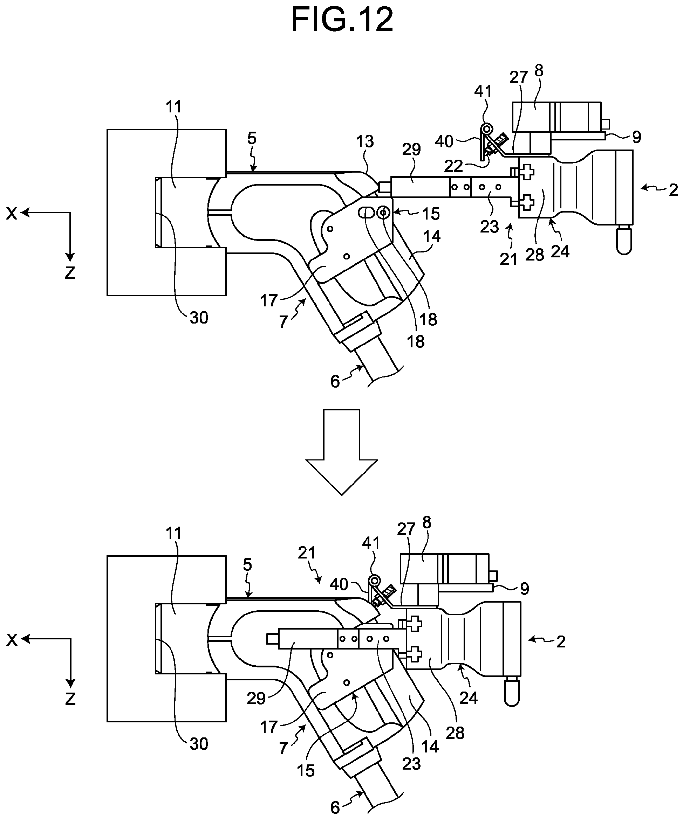

As illustrated in FIG. 12, when the robot hand 2 removes the charging connector 5 connected to the charging port 30, the robot hand 2 rotates to lower the pressing piece 40 by the action of gravity, and then moves from the releasing position toward the holding position. When the robot hand 2 is positioned at the holding position while the pressing piece 40 is in the lowered state, the robot hand 2 is brought to a pressing state in which the pressing piece 40 presses the release button 13. While the pressing piece 40 presses the release button 13, the holding device 21 chucks the holding member 7. When the robot hand 2 moves in a direction in which the charging connector 5 is removed from the charging port 30 in this state, the charging connector 5 can be removed from the charging port 30.

As described above, according to the second embodiment, in a case in which the charging connector 5 is removed from the charging port 30, the pressing piece 40 is brought to the lowered state, and the release button 13 can be pressed. In a case in which the charging connector 5 is inserted into the charging port 30, the robot hand 2 is rotated to bring the pressing piece 40 to the raised state by the action of gravity, and the release button 13 cannot be pressed. When the charging connector 5 is inserted into the charging port 30 in this state, the charging connector 5 is locked by the locking mechanism 12. Therefore, even when the chucking is released, the charging connector 5 is not removed by the weight of the charging connector 5 or the weight of the charging cable 6.

## Claims

1. An automatic charging robot configured to perform charging by inserting a charging connector into a charging port of a vehicle, the automatic charging robot comprising:
a robot hand configured to hold the charging connector when the charging connector is automatically inserted into and removed from the charging port, wherein
the robot hand includes:
a holding device configured to hold a holding member attached to the charging connector; and
a pressing portion configured to press, by the holding device being at a position at which the holding member is holdable, a release button provided on the charging connector as an operation unit configured to release a locked state in which the charging connector inserted into the charging port is locked.

2. The automatic charging robot according to claim 1, wherein
the holding device includes:
a pair of claw portions formed so as to face each other and configured to hold the holding member so as to sandwich the charging connector from both sides in a width direction; and
an actuator configured to operate the pair of claw portions so as to change a facing distance between the pair of claw portions,
the robot hand is relatively movable with respect to the charging connector between a holding position, the holding position being a relative position when the pair of claw portions is at a position at which the holding member is holdable, and a releasing position, the releasing position being a relative position when the charging connector is not in a facing space of the pair of claw portions, and
the pressing portion starts pressing the release button while the robot hand is moving from the releasing position toward the holding position.

3. The automatic charging robot according to claim 2, wherein
the pressing portion is a fixing member fixed to the robot hand, and
the robot hand is brought to a pressing state in which the fixing member always presses the release button when the claw portions are at the position at which the holding member is holdable.

4. The automatic charging robot according to claim 2, wherein
the pressing portion is constituted by a hinge mechanism configured to support a pressing piece so as to be swingable, and
the hinge mechanism is switched between a pressable state, in which the release button is pressable by the pressing piece when the pressing piece is in a lowered state, and a non-pressable state, in which the release button is not pressable by the pressing piece when the pressing piece is in a raised state.

5. The automatic charging robot according to claim 4, wherein
while the hinge mechanism is in the pressable state, the robot hand is brought to a pressing state, in which the pressing piece presses the release button when the claw portions are at the position at which the holding member is holdable, and
while the hinge mechanism is in the non-pressable state, the robot hand is brought to a non-pressing state, in which the pressing piece does not press the release button even when the claw portions are at the position at which the holding member is holdable.

6. The automatic charging robot according to claim 4 or 5, wherein
the hinge mechanism is switched between the pressable state and the non-pressable state by gravity acting on the pressing piece when the robot hand rotates around a predetermined rotation center axis.
